# EUROPEAN PATENT APPLICATION

(11) **EP 1 759 796 A1**
(43) Date of publication of application: **07.03.2007**
(21) Application number: 06119338.9
(22) Date of filing: 22.08.2006
(51) Int. Cl.: B23D 51/01

(54) **Jigsaw with a rotating handle**

(30) Priority: 02.09.2005 US 713844 P; 08.08.2006 US 500564
(71) Applicant: Black & Decker, Inc., Newark, DE 19711 (US)
(72) Inventor: Phillips, Alan, Jackson, TN 38305 (US)
(74) Representative: Bell, Ian Stephen

(57) **Abstract**

The present application is directed to a jigsaw (100) including a rotating handle (118). The jigsaw (100) includes a motor housing (104) for containing a motor. The motor housing (104) includes a first end (106) and a second end (108). The first end (106) of the motor housing (104) is coupled to a saw blade assembly (110). Further, a handle assembly (102) is rotationally coupled to the second end (108) of the motor housing (104) for rotation of the handle assembly (102) to a plurality of positions. The plurality of positions include from a zero orientation to plus or minus 90° (ninety degrees) of the zero orientation. Additionally, a securing mechanism (124,144,146,148,150,152,154) is operationally coupled to the handle assembly (102) for securing the rotational position of the handle assembly (102) up to plus or minus 90° (ninety degrees) of the zero orientation.

## Description

The present application claims priority under 35 U.S.C. § 119(e) to United States Provisional Application Number 60/713,844 filed September 2, 2005, which is hereby incorporated by reference in its entirety.

The present invention relates to the field of power tools and particularly to a jigsaw with a rotating handle.

Often a single woodworking project requires a woodworker to make straight cuts as well as curved cuts. To accomplish both types of cuts, woodworkers often utilize a jigsaw. A jigsaw is an extremely versatile hand tool in which it combines many of the features of a band saw and scroll saw into a single, compact power tool. Conventional jigsaws are capable of cutting many types of materials including wood, plastic and metal. Further, such saws make a variety of cuts including rough cuts, tight cuts and curved cuts.

Although conventional jigsaws are versatile tools which allow woodworkers to make a variety of cuts in various materials, such tools are disadvantageous under certain conditions. For example, jigsaws are often employed to cut tight curves. A woodworker typically outlines the desired cut on the workpiece and then follows the outline with the saw blade to accomplish the cut. Presently, a woodworker is required to move the entire saw body when making a curved cut which makes some cuts extremely difficult, if not impossible, when space is limited. Thus, prior art jigsaws are of limited use in confined spaces.

Therefore, it would be desirable to design a jigsaw which allowed a woodworker to cut tight curves in confined spaces. Further, it would be desirable to provide a jigsaw with more convenient hand placement possibly allowing a user to make smoother, more precise cuts.

Accordingly, the present invention is directed to a jigsaw including a rotating handle. In an exemplary embodiment in accordance with the present invention, the jigsaw includes a motor housing for containing a motor. The motor housing includes a first end and a second end. The first end of the motor housing is coupled to a saw blade assembly. Further, a handle assembly is rotationally coupled to the second end of the motor housing for rotation of the handle assembly to a plurality of positions or orientations. The plurality of positions or orientations include from a zero orientation to plus or minus 90° (ninety degrees) of the zero orientation. Additionally, a securing mechanism is operationally coupled to the handle assembly for securing the rotational position of the handle assembly up to plus or minus 90° (ninety degrees) of the zero orientation.

In specific aspects of the present invention, the handle assembly may be rotationally coupled to the second end of the motor housing via an interconnect including a rib or a groove disposed about the peripheral portions of the interface between the handle assembly and the motor housing. In alternative embodiments, the handle assembly is rotationally coupled to the second end of the motor housing via a connector. In an exemplary embodiment, the connector includes a rib and groove disposed about the peripheral portions of the connector. In further exemplary embodiments, the securing mechanism is a biased latch for engaging a catch included on the motor housing. In such embodiment, the biased latch is locked by engagement with recessed portions present within a generally annular rib included within the motor housing. In additional exemplary embodiments, a stop is connected to at least one of the handle assembly and the motor housing. The stop prevents the handle assembly from rotating more than approximately plus or minus 90° (ninety degrees) from the zero orientation. In even further exemplary embodiments, contact plates are included for allowing electrical connections to be established between the motor and the handle assembly.

It is to be understood that both the forgoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

The numerous advantages of the present invention may be better understood by those skilled in the art by reference to the accompanying figures in which:
FIG. 1 is an isometric view of a jigsaw including a rotating handle in accordance with the present invention, wherein the handle is disposed in a conventional orientation;
FIG. 2 is an isometric view of the of the jigsaw illustrated in FIG.I, wherein the rotating handle is disposed at approximately 90° (ninety degrees) from the conventional orientation;
FIG. 3A is an exploded view of a jigsaw in accordance with the present invention, wherein the rotating handle assembly and motor housing include corresponding ribs and grooves;
FIG. 3B is an exploded view of a jigsaw in accordance with the present invention, wherein a connector is employed to couple the rotating handle assembly to the motor housing;
FIG. 3C is an exploded view of a jigsaw in accordance with the present invention, wherein electrical connections between the rotating handle assembly and the motor housing are established via contact plates;
FIG. 4 is a cut-away view of the rotating handle assembly illustrated in FIGS. 3A - 3C, wherein a latch is included for securing the rotating handle assembly in a desired orientation;
FIG. 5 is a cross-sectional view of the rotating handle assembly of FIG. 4, wherein a stopping mechanism is included for preventing rotation more than approximately plus or minus ninety degrees (90°) from the zero orientation;
FIG. 6 is a cross-sectional view of the rotating handle assembly illustrated in FIG. 4, wherein a plurality of recesses are included in the rotating handle assembly;
FIG. 7 is a cross-sectional view of a jigsaw in accordance with the present invention, wherein a latch assembly is included allowing for both coarse and fine adjustment of the rotating handle assembly; and
FIG. 8 is an isometric view of an exemplary embodiment in accordance with the present invention, wherein the rotating handle is disposed in a conventional orientation.

Reference will now be made in detail to the presently preferred embodiments of the invention, examples of which are illustrated in the accompanying drawings.

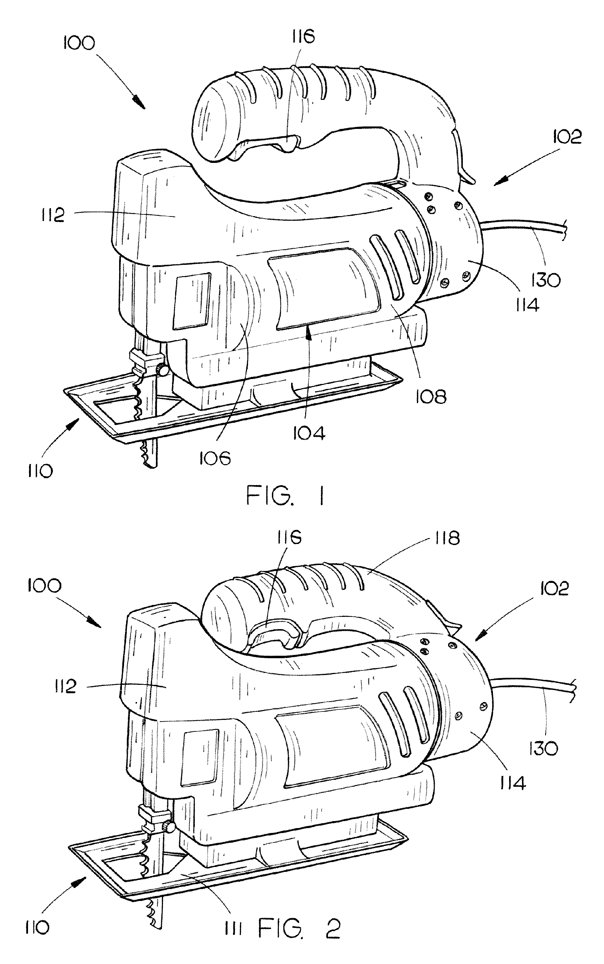

Referring generally to FIGS. 1-8, the present invention is directed to a jigsaw with a rotating handle assembly. The disclosed jigsaw with a rotating handle assembly allows a woodworker to use such tool in confined spaces for the handle may be rotated to avoid contact with surrounding walls or other obstacles as needed. Further, the instant jigsaw provides a more comfortable grip for the handle may be rotated instead of the user's hand having to be.

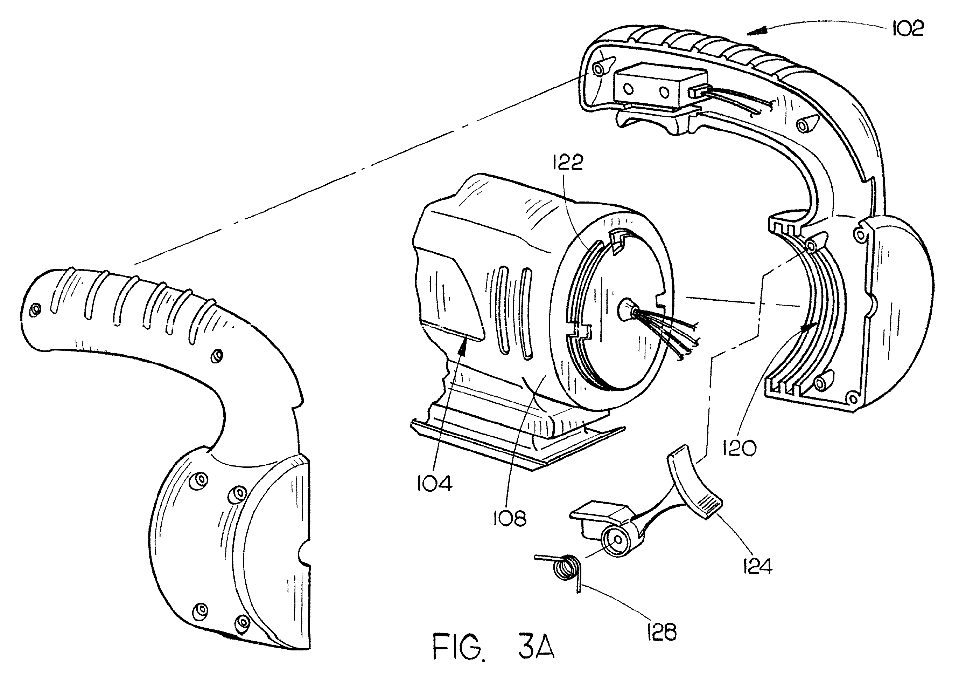

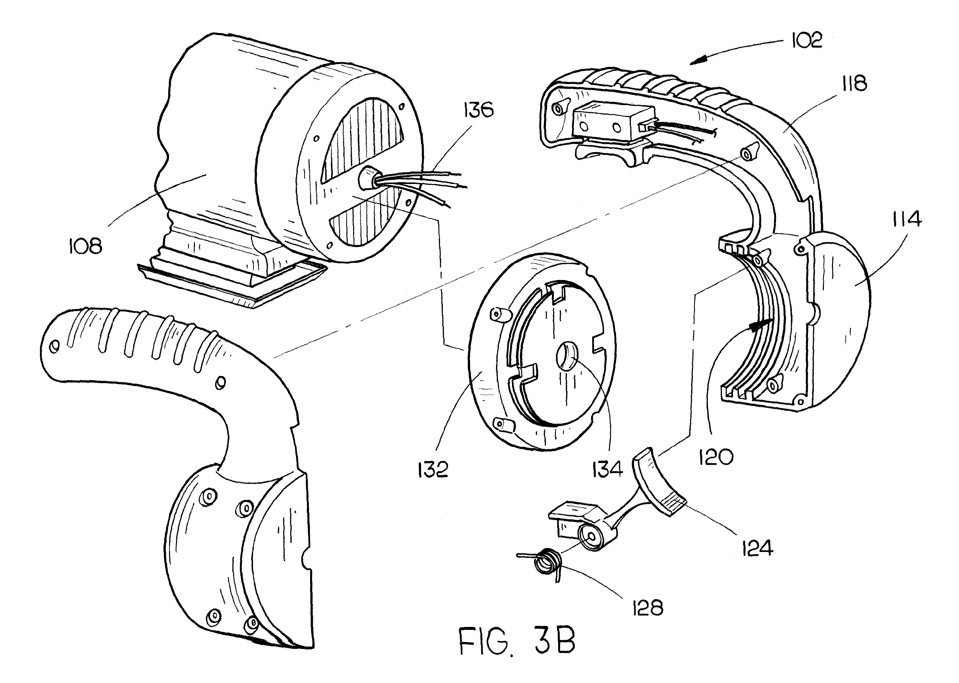

Referring specifically to FIGS. 1 and 2, a jigsaw 100 including a rotating handle assembly 102 is disclosed. The jigsaw includes a motor housing 104 for containing a motor. In the exemplary embodiment, the motor housing 104 is generally cylindrical. It is contemplated however that the motor housing shape may vary without departing from the scope and spirit of the present invention. Further, the motor housing 104 includes a first end 106 and a second end 108. Included on the first end 106 is the saw blade assembly 110 and an upper housing 112. In the exemplary embodiment, the second end 108 of the motor housing 104 may include a rib, groove or the like (See FIG. 3A) or in the alternative, be capable of coupling with a connector (See FIG. 3B) allowing the motor housing 104 to be coupled to the handle assembly 102. The rotating handle assembly 102 includes a handle 118 and a cylindrical member 114. The handle 118 provides a surface for a user to grip while operating the jigsaw 100. In the present embodiment, the handle 118 is generally L-shaped allowing a user to efficiently grasp the handle 118 while operating the jigsaw 100. The cylindrical member 114 includes a rib, groove or the like for interlocking with the corresponding rib or groove integrally formed on the second end 108 of the motor housing or on a connector 132 allowing the rotating handle assembly 102 to be connected to the second end of the motor housing 104 (as illustrated in FIGS. 3A and 3B, respectively). It is contemplated that the exterior housing of the cylindrical member 114 which includes a rib, groove, or the like may be varied in shape to correspond to the shape of the motor housing 104. The handle 118 may be economically designed to minimize user fatigue and maximize user gripability by including deformable soft grips on the handle 118. The use of soft grips dampen vibrations as well as provides a user an easier surface to grip for user grip slippage is minimized.

In further exemplary embodiments, the jigsaw 100 includes a switch 116 mounted to the handle 118 for controlling the flow of electricity to the tool's electrical system supplied by an electrical supply cord 130. For example, a switch may be mounted generally on an upper inside portion of a generally L-shaped handle so that a user may easily access the switch by extending one's fingertips rather than having to move one's hand to have access to a switch mounted toward the rear of the jigsaw 100 (e.g. near the electrical supply cord 130).

As illustrated in FIG. 2, the jigsaw handle 118 is capable of rotation whereby the rotating handle assembly 102 is disposed at an angle instead of being positioned at the conventional orientation or a zero orientation. The zero orientation is defined as that in which the handle 118 is one-hundred and eighty degrees (180°) from the base plate 111. The rotating handle assembly 102 is capable of one hundred and eighty degrees (180°) of movement wherein the handle assembly 102 may be moved plus or minus ninety degrees (90°) from the zero orientation.

Referring specifically to FIG. 3A, an exemplary embodiment of the rotating handle assembly 102 in accordance with the present invention is illustrated, whereby the second end 108 of the motor housing 104 includes a rib or groove 120. Such rib or groove 120 may be aligned and interlocked with a corresponding rib or groove 122 included on the rotating handle assembly 102. The present configuration allows the rotating handle assembly 102 to be rotationally connected to the second end 108 of the motor housing 104.

It is contemplated that multiple ribs or protrusions may be utilized with a corresponding groove formed there between. Ultimately, a groove is a structure formed by two ribs. Preferably, at least two ribs are utilized to form a secure coupling with corresponding ribs/grooves included on the handle. The use of at least two ribs mayminimize handle wobbling, allow stress to be distributed across multiple ribs, prevent the entry of dust and debris into the motor handle cavity, and the like.

Referring specifically to FIG. 3B, an additional embodiment of the rotating handle assembly 102 is provided. In the present embodiment, the jigsaw 100 includes a connector 132 which may be mounted via fasteners including screws to the second end 108 of a motor housing 104. In the exemplary embodiment, the connector 132 includes an aperture 134 for passing wire 136 to the handle assembly 102. Utilization of a separate connector 132 may allow for efficient manufacturing, permit retro-fitting, and even minimize damage to the motor housing 104 if the tool were to be dropped.

In an exemplary embodiment, the connector 132 may include a pair of generally annular ribs 135 protruding outward from the periphery of the connector 132 to allow for the alignment and interlocking of such ribs 135 with a corresponding rib or groove 120 included on an interior cylindrical portion 114 of the handle assembly 102. The present configuration allows the rotating handle assembly 102 to be connected to the second end 108 of the motor housing 104 and for such assembly 102 to rotate plus or minus ninety degrees (90°) from the conventional orientation of the handle assembly or zero orientation. In an advantageous embodiment, at least two ribs are employed to form a secure pivotal coupling with corresponding ribs/grooves included on the handle. As stated previously, such rib configuration may minimize handle wobbling, allow stress to be distributed across multiple ribs, prevent the entry of dust and debris into the motor cavity, and the like.

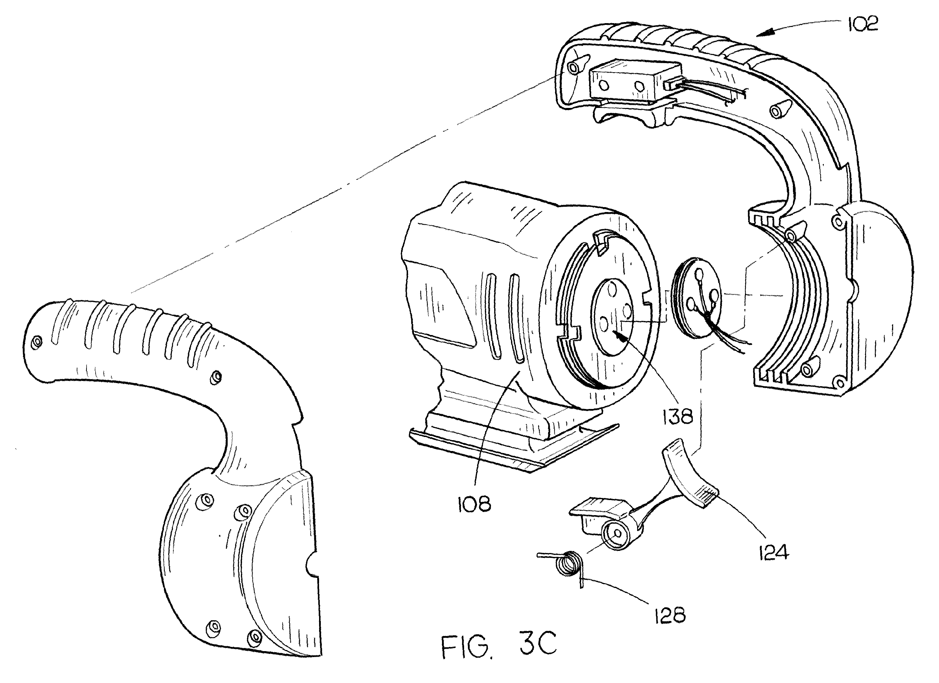

In an additional exemplary embodiment, as illustrated in FIG. 3C, electrical connections, such as between the power switch and the motor may be established via contact plates 138. Thus, the need for continuous wired connections between the motor housing 104 and the handle 118 is eliminated and the possibility of wires being kinked during rotation is eliminated by such configuration. For example, a contact plate may be included in a connector to which the rotating handle assembly and the motor housing are coupled to allowing an electrical connection to be established. Additionally, wires connected to the motor may be connected to wires located in the handle assembly 102 coupled to a power switch by the wires located in the motor housing being connected to a first contact plate and the wires located in the handle assembly being connected to a second contact plate. The first and second plates then establishing contact and thus electrical connections once the motor housing is coupled to the rotating handle assembly 102. In further exemplary embodiments, contact plates may be positioned so that an electrical connection between the rotating handle assembly and the motor housing is only established at discreet orientations.

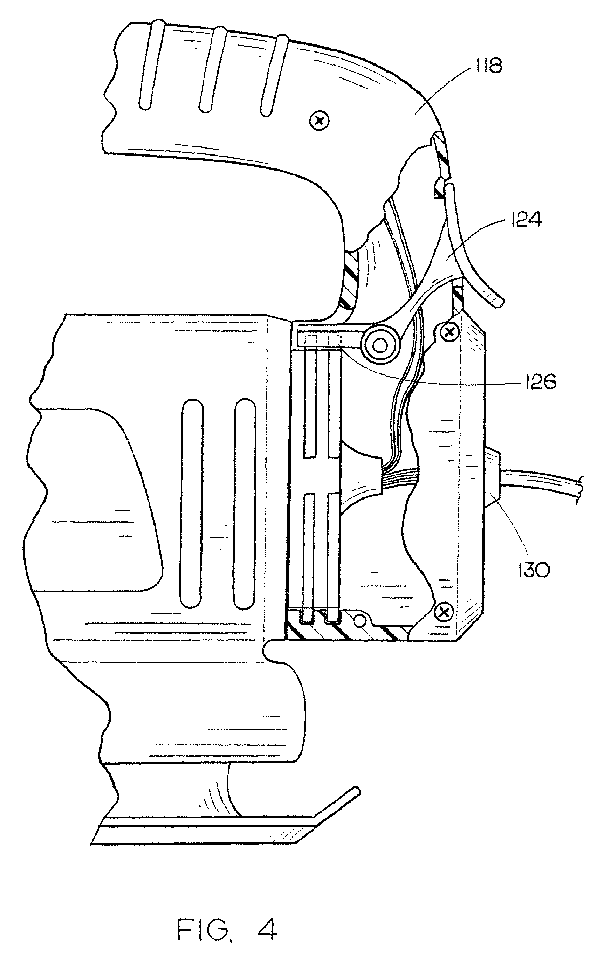

In further exemplary embodiments, as illustrated in FIGS. 3A, 3B, and 4, a securing mechanism is included for locking the motor housing 104/handle assembly 102 in a desired orientation. For instance, a pivoting latch 124 may engage a catch such as a recessed portion included in the generally annular ribs 120 or the like. The latch 124 may have a generally T-shaped cross-section configured to engage with the generally perpendicular sidewalls 126 forming the recess. Preferably, the latch 124 is biased, such as by a torsion spring 128, into engagement with a recessed portion included in ribs within the motor housing and handle to lock the handle in a desired orientation.

Referring to FIG. 4, for example, to release the latch 124 a lever end portion of the latch 124 is depressed (overcoming the biasing force) thereby pivoting the bar portion of the latch 124 out of engagement with the sidewalls of the connector ribs 126 included in the motor housing and handle 118. Preferably, the securing mechanism is disposed on the side of the handle 118, generally above the included electrical supply cord 130, to allow convenient adjustment when the handle 118 is orientated in a conventional orientation (such as for a jigsaw with a non-rotating handle). Those of skill in the art will appreciate that various securing mechanisms may be utilized such as latch mechanisms,biased pin devices, cam locking devices (for engaging a recess), and the like for fixing the orientation of a rotating handle.

The securing mechanism illustrated in FIGS. 3A, 3B, 3C, and 4 may permit the motor housing 104/handle assembly 102 to be locked at desired intervals such as in the zero orientation, plus 90° (ninety degrees), and minus 90° (ninety degrees). Arranging a locking mechanism at plus 90° (ninety degrees) and minus 90° (ninety degrees) is desirable for it may allow a user to more accurately form perpendicular cuts.

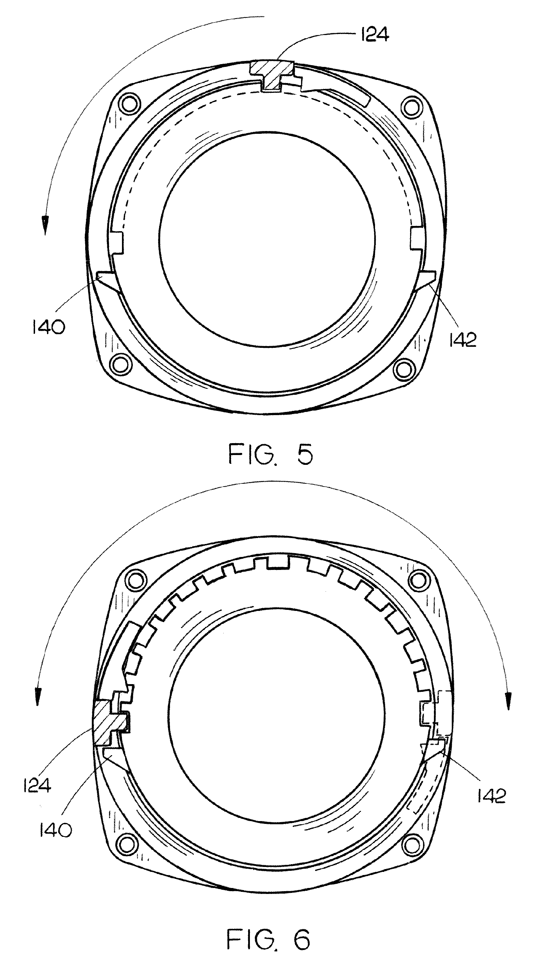

In additional exemplary embodiments, as illustrated in FIGS. 5 and 6, the jigsaw 100 includes a stopping mechanism for preventing rotation of the handle assembly 102 beyond approximately plus or minus 90° (ninety degrees) from the zero orientation to avoid wires from becoming kinked. For example, the motor housing may include a mechanical stops which contact either a first stop 140 at plus 90° (ninety degrees) or a second stop 142 at minus 90° (ninety degrees) on the handle assembly 102 (as illustrated in FIGS. 5 and 6). Further, if a connector such as that described previously is to be employed to couple the rotating handle assembly 102 to the motor housing 104 of the jigsaw 100, then the connector may include the appropriate stops to correspond with those disposed within the handle assembly 102. In the present exemplary embodiment, the stops include protrusions, however, those of skill in the art will appreciate that various mechanisms may be implemented to stop rotation including fasteners, clips, additional recesses or the like without departing from the scope and spirit of the present invention.

Referring specifically to FIG. 6, additional mechanisms for securing the handle assembly 102 at angles in between the zero orientation and plus or minus 90° (ninety degrees) is provided. As illustrated in FIG. 6, additional recesses may be included at approximately plus 15° (fifteen degrees), 30° (thirty degrees), 45° (forty-five degrees), 60° (sixty degrees), 75° (seventy-five degrees), and 90° (ninety degrees) from the zero orientation, and approximately minus 15° (fifteen degrees), 30° (thirty degrees), 45° (forty-five degrees), 60° (sixty degrees), 75° (seventy-five degrees), and 90° (ninety degrees) from the zero orientation. The present configuration provides a handle assembly 102 which may be rotated to various degrees with both ease and efficiency. It is contemplated that the degrees at which the recesses are disposed may vary as desired. It is further contemplated that additional clamps may be employed to allow the rotating handle assembly to be secured at any position in between the zero orientation and plus or minus 90° (ninety degrees).

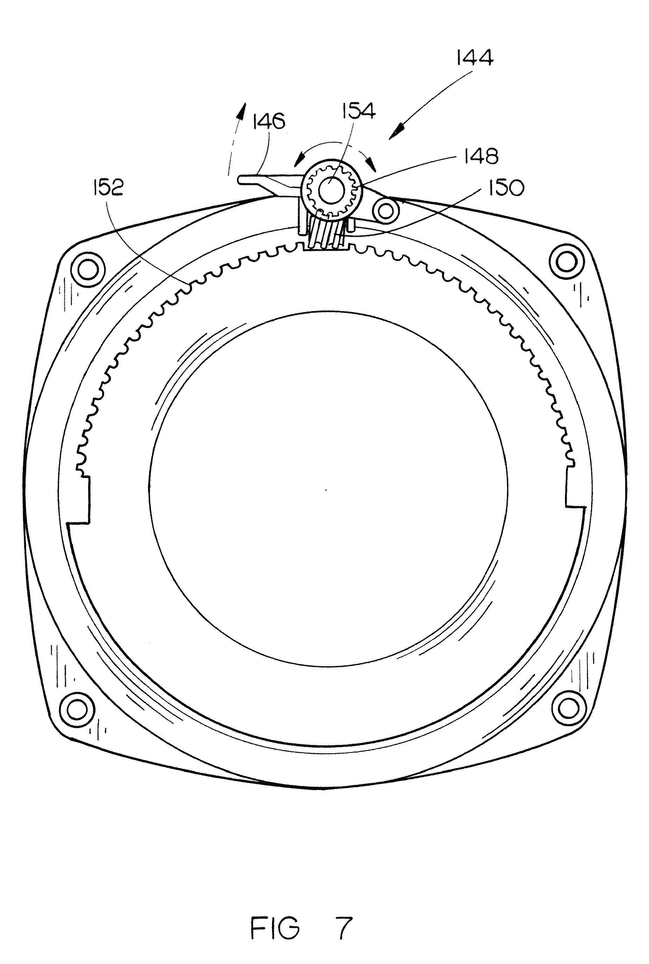

Referring to FIG. 7, an even further exemplary embodiment of a securing mechanism for locking the motor housing 104/handle assembly 102 in a desired orientation is provided. As illustrated in FIG. 7, the securing mechanism includes a lever assembly 144 including a lever 146 coupled to a gearing system allowing for fine adjustment of the handle assembly 102. In an exemplary embodiment, the gearing system includes a first gear 148 which is coupled to the lever 144 and a worm gear 150. In turn, the worm gear 150 engages a main gear 152 disposed within a groove or rib of the handle assembly and motor housing or connector side walls. In the exemplary embodiment, a user may lock the handle assembly 102 plus or minus 90° (ninety degrees) from the zero orientation by lifting the lever 146 of the lever assembly 144 resulting in the disengagement of the worm gear 150 with the main gear 152. In the alternative, for finer adjustment (i.e. adjustment of the rotating handle assembly 102 in between plus or minus 90° (ninety degrees) from the zero orientation a user may rotate a knob 154 disposed perpendicular to the worm gear 150 until the desired degree of rotation is obtained.

It is contemplated that various indicating assemblies may be used to indicate to the user the degree of rotation including visual indicators (e.g. labeling on the handle assembly), auditory indicators (e.g. fifteen degrees of rotation denoted by a clicking noise), and the like. In addition, it is understood that the first gear 148, worm gear 150, and the main gear 152 may be formed of material which is highly durable including aluminum, steel, and like. Furthermore, it is understood that additional devices may be employed allowing for fine adjustment of the rotating handle assembly including fasteners and the like.

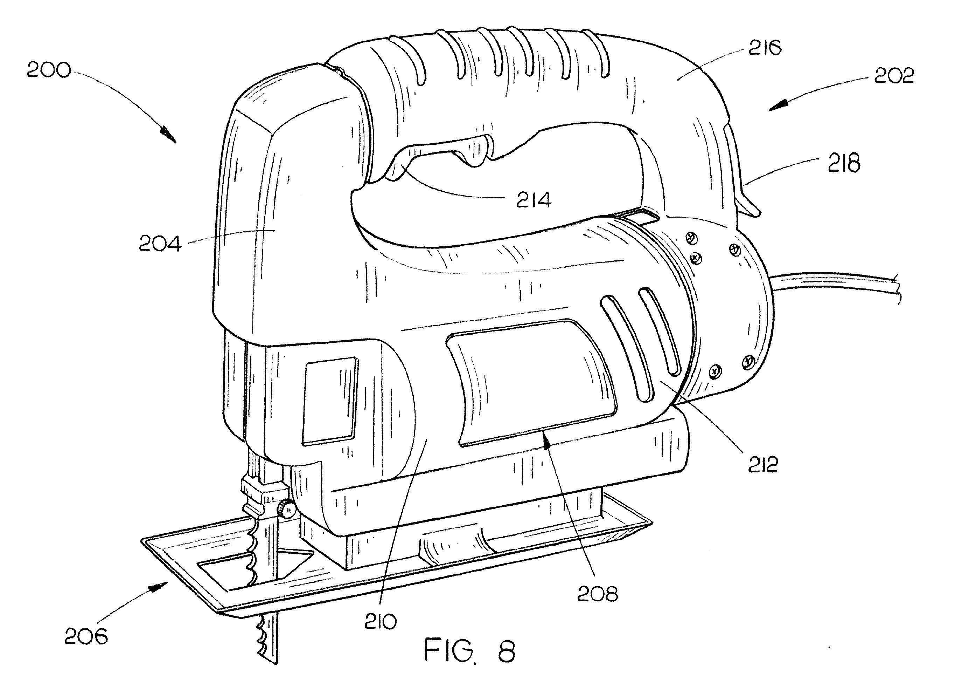

Referring now to FIG. 8, a jigsaw 200 in accordance with a second embodiment of the present invention is described, wherein a rotating handle assembly 202 aligns and may be integrated with the upper housing 204 of a saw blade assembly 206. The jigsaw includes a motor housing 208 for containing a motor. The motor housing 208 is generally cylindrical. Further, the motor housing 208 includes a first end 210 and a second end 212. Included on the first end 210 is the saw blade assembly 206 including the upper housing 204. As described above, the second end 212 of the motor housing 208 as well as the rotating handle assembly 202 may include ribs, grooves or the like in order to couple to one another. Alternatively, a connector, as described previously, may be employed to couple the motor housing 208 to the rotating handle assembly 202.

In accordance with an additional embodiment, the jigsaw 200 includes a switch 214 mounted to the handle 216 for controlling the flow of electricity to the jigsaw's electrical system. For example, as described previously, a bar switch may be mounted generally on an upper inside portion of a L-shaped handle so that a user may easily access the switch by extending ones finger tips. A bar switch is preferable because a user may conveniently activate the switch independent of the rotation of the handle.

As illustrated in FIG. 8, the handle 216 of the rotating handle assembly 202 is capable of being aligned and integrated with the upper housing 204 of the saw blade assembly 206. In an exemplary embodiment, a securing mechanism 218 is disposed within the upper housing 204 of the saw blade assembly 206 allowing the handle 216 to be secured or fastened to the upper housing 204. Such configuration imparts greater stability to the handle 216 which may be desired when utilizing the jigsaw 200 in the conventional orientation to cut thick, dense material. The securing mechanism 218 may include a snap fit whereby the handle 216 may snap to the upper housing 204 of the saw blade assembly 206. In additional embodiments, the securing mechanism may include a clip or the like.

As described for the jigsaw 100, the jigsaw 200 is also capable of 180° (one hundred and eighty degrees) of movement wherein the handle assembly 202 may be moved plus or minus 90° (ninety degrees) from the zero orientation. A latch 218 may be included for securing the handle assembly 202 at plus or minus 90° (ninety degrees) from the zero orientation. Those of skill in the art will appreciate that various securing mechanisms may be utilized in addition to the latch mechanism such as biased pin devices, cam locking devices (for engaging a recess), and the like for fixing the orientation of a rotating handle. Moreover, additional securing mechanisms may be used to secure the handle assembly at angles in between the zero orientation and plus or minus 90° (ninety degrees). In addition, a stopping mechanism for preventing rotation of the handle assembly 202 beyond approximately plus or minus 90° (ninety degrees) from the zero orientation may be employed.

It is contemplated that the disclosed rotational handle may be coupled to various types of jigsaws including corded, cordless, and air powered jigsaws.

It is believed that the apparatus of the present invention and many of its attendant advantages will be understood by the forgoing description. It is also believed that it will be apparent that various changes may be made in the form, construction and arrangement of the components thereof without departing from the scope and spirit of the invention or without sacrificing all of its material advantages. The form herein before described being merely an explanatory embodiment thereof. It is the intention of the following claims to encompass and include such changes.

## Claims

1. A jigsaw, comprising:
a motor housing for containing a motor, the motor housing including a first end and a second end, the first end being coupled to a saw blade assembly; a handle
assembly rotatably coupled to the second end of the motor housing for rotation of the handle assembly, the handle assembly capable of being rotated from a zero orientation up to plus or minus ninety degrees (90°) from the zero orientation; and a securing mechanism coupled to the
handle assembly for securing the rotational position of the handle assembly, wherein the securing mechanism is
configured to secure the handle assembly up to plus or minus ninety degrees (90°) from the zero orientation allowing the jigsaw to be used to make tight cuts in confined spaces.

2. The jigsaw of claim 1, wherein the handle assembly is rotatably coupled to the second end of the motor housing via a rib and a groove disposed about the peripheral portions of the interface between the handle assembly and the motor housing.

3. The jigsaw of claim 1, wherein the handle assembly is rotatably coupled to the second end of the motor housing via a connector.

4. The jigsaw of claim 3, wherein the connector includes an interconnect.

5. The jigsaw of claim 4, wherein the interconnect includes a rib or groove.

6. The jigsaw of claim 1, wherein the securing mechanism is a biased latch for engaging a catch included on one of the motor housing and the handle assembly.

7. The jigsaw of claim 6, wherein the biased latch is locked by engagement with recessed portions present within a generally annular rib included within one of the motor housing and the handle assembly.

8. The jigsaw of claim 7, wherein recessed portions of the rib are located at the zero orientation, approximately plus ninety degrees (90°) from the zero orientation, and approximately minus ninety degrees (90°) from the zero orientation.

9. The jigsaw of claim 1, further comprising a stop connected to at least one of the handle assembly and the motor housing whereby the stop prevents the handle assembly from rotating more than approximately plus or minus ninety degrees (90°) from the zero orientation.

10. A jigsaw, comprising:
a motor housing for containing a motor, the motor housing including a first end and a second end, the first end being coupled to a saw blade assembly, and the second end including a generally annularly ribbed end; a handle assembly rotatably coupled to the second
end of the motor housing for rotation of the handle assembly to a plurality of positions, the handle assembly including a grooved end and the plurality of positions including a zero orientation to plus or minus ninety degrees (90°) from the zero orientation; a stop connected to at least one of the handle
assembly and the motor housing whereby the stop prevents the handle assembly from rotating more than approximately plus or minus ninety degrees (90°) from the zero orientation; and a securing mechanism coupled to the
handle assembly for securing the rotational position of the handle assembly,
wherein the handle assembly is rotationally coupled to the second end of the motor housing to form the jigsaw with a rotating handle via the alignment of the ribbed end of the second end of the motor housing with the corresponding grooved end of the handle assembly.

11. The jigsaw of claim 10, wherein the securing mechanism is a biased latch for engaging a catch included on the motor housing.

12. The jigsaw of claim 11, wherein the biased latch is locked by engagement with recessed portions present within a generally annular rib included within the motor housing.

13. The jigsaw of claim 12, wherein recessed portions of the rib are located at the zero orientation, approximately plus ninety degrees (90°) from the zero orientation, and approximately minus ninety degrees (90°) from the zero orientation.

14. The jigsaw of claim 10, further comprising contact plates allowing electrical connections to be established between the motor and the handle assembly.

15. The jigsaw of claim 10, further comprising a locking mechanism on an upper housing of the saw blade assembly allowing the handle assembly to become integrated with the upper housing.

16. A jigsaw, comprising:
a motor housing for containing a motor, the motor housing including a first end and a second end, the first end being coupled to a saw blade assembly;
means for grasping the jigsaw by a user;
means for rotatably coupling the motor housing to the means for grasping; and means for securing the grasping means in at least one predetermined rotational orientation with
respect to the motor housing.

17. The jigsaw of claim 16, wherein the means for grasping the jigsaw by a user is a handle assembly.

18. The jigsaw of claim 16, wherein the means for rotationally coupling the motor housing to the means for grasping includes a rib and a groove disposed about the peripheral portions of the interface between the means for grasping and the motor housing allowing for rotation of the means for grasping from a zero orientation to plus or minus ninety degrees (90°) from the zero orientation.

19. The jigsaw of claim 16, wherein the means for rotationally coupling the motor housing to the means for grasping includes a connector.

20. The jigsaw of claim 16, wherein the securing means includes a latch configured to secure the grasping means at a plurality of positions including plus ninety degrees (90°) from the zero orientation and minus ninety degrees (90°) from the zero orientation.
